Europäisches Patentamt

European Patent Office

Office européen des brevets

(19)

(11) Veröffentlichungsnummer: **0 207 934 B2**

(12) # NEUE EUROPÄISCHE PATENTSCHRIFT

(45) Veröffentlichungstag der neuen Patentschrift:
**10.07.91 Patentblatt 91/28**

(51) Int. Cl.$^5$: **C09D 5/08**

(21) Anmeldenummer: **85900040.8**

(22) Anmeldetag: **18.12.84**

(86) Internationale Anmeldenummer:
**PCT/CH84/00198**

(87) Internationale Veröffentlichungsnummer:
**WO 86/03764 03.07.86 Gazette 86/14**

(54) ROSTINHIBIERENDE GRUNDIERUNGSZUSAMMENSETZUNG.

Die Akte enthält technische Angaben, die nach dem Eingang der Anmeldung eingereicht wurden und die nicht in dieser Patentschrift enthalten sind.

(43) Veröffentlichungstag der Anmeldung:
**14.01.87 Patentblatt 87/03**

(45) Bekanntmachung des Hinweises auf die Patenterteilung:
**21.09.88 Patentblatt 88/38**

(45) Bekanntmachung des Hinweises auf die Entscheidung über den Einspruch:
**10.07.91 Patentblatt 91/28**

(84) Benannte Vertragsstaaten:
**AT BE CH DE FR GB LI LU NL SE**

(56) Entgegenhaltungen:
**EP-A- 0 107 899**

(56) Entgegenhaltungen:
**WO-A-84/04105**
**DE-B- 2 425 213**
**FR-A- 2 254 653**
**GB-A- 0 826 564**
**GB-A- 2 075 538**
**US-A- 3 968 313**
**US-A- 3 970 482**
**Römpps Chemie Lexikon, 8. Auflage, 1981, Seiten 79, 1738, 2348, 3313**

(73) Patentinhaber: **SFS Stadler AG.**
**Nefenstrasse 30**
**CH-9435 Heerbrugg (CH)**

(72) Erfinder: **JENAL, Louis**
**Flurstrasse 8**
**CH-9443 Widnau (CH)**

(74) Vertreter: **Maspoli, René A., Dipl.-Chem. Ing. ETH et al**
**p.A. PATENTANWALTSBUREAU R.A. MASPOLI Postfach 191**
**CH-8053 Zürich (CH)**

EP 0 207 934 B2

Jouve, 18, rue Saint-Denis, 75001 PARIS

## Beschreibung

Diese Erfindung betrifft ein rostinhibierendes Grundierungsmittel, welches aufgrund seiner neuen Zusammensetzung und des Verfahrens zu seiner Herstellung hohe Lagerstabilität und ausgezeichnete Anwendungscharakteristiken zeigt.

Rostschutz- bzw. Rostumwandlungsmittel, die sowohl plastische Harze bzw. Bindemittel gelöst oder in Emulsion und auch organische Chelatbildner — speziell Tannine — enthalten, sind bekannt. Die Entwicklung derartiger Mittel kann anhand der Patentliteratur ziemlich gut verfolgt werden.

In der österreichischen Patentschrift 149 199, veröffentlicht am 10.04.1937, wird ein Rostschutzmittel gelehrt, das unter anderem Gerbsäurelösungen (Tanninlösungen) und andere organische Säuren ausschliesslich gelöst, bzw. in Lösung, gemischt mit organischen lösungsmittellöslichen Harzen, hauptsächlich Zelluloseharzen enthält. Wässerige Emulsionen werden nicht angedeutet und Zusammensetzung sowie Herstellungsverfahren scheinen nicht erfindungsrelevant zu sein.

Die englische Patentschrift 826 564, veröffentlicht am 13.01.1960, lehrt und beansprucht metalloberflächenschützende Zusammensetzungen, welche saure vegetabile Tanninextrakte und Latexe enthalten. In den Beispielen 1 und 2 des genannten GB Patentes wird je eine Mischung bestehend aus einem Volumenteil einer 50 G/V%-igen Lösung von natürlichem Tannin und einem gleichen Volumenteil plastifiziertem Polyvinylacetat-Latex beschrieben. Weitere Angaben über die Zusammensetzung fehlen und auch die Probleme der Herstellung und der Lagerung bzw. Anwendung werden nicht aufgegriffen. Die technisch-chemischen Unterlagen, die zum eben besprochenen englischen Patent geführt haben, sind im Journal of Oil and Colour, London, Jan. 1958, auf den Seiten 10 bis 23 veröffentlicht worden. Die Herstellung von Tannin und Kunststoffharz-Emulsionen enthaltenden Rostschutzmitteln wird darin eher als Ziel denn als abgeschlossene Entwicklung dargestellt. Dies entspricht den Beispielsangaben im englischen Patent, welche praktisch kaum nachmachbar sind.

Die Entwicklung richtete sich anschliessend eher wieder auf die Anwendung von Lösungen, die nur Tannine enthalten. Derartige Lösungen sind beispielsweise in der schweizerischen Patentschrift 513 255, veröffentlicht am 15.11.1975, angegeben. Diese roststabilisierenden Mittel werden vor der Grundierung aufgetragen.

Chelatbildnerhaltige, und daher rostumwandelnde Zusammensetzungen, die einen hohen Anteil an plastischen Bindemitteln aufweisen, werden schliesslich in der schweizerischen Patentschrift 580 152 gelehrt und beansprucht.

Bei den bekannten Mitteln gemäss dem obigen CH Patent lassen jedoch sowohl Lagerbeständigkeit wie auch Anwendungscharakteristiken und Wirkung, speziell als Grundierungsmittel, zu wünschen übrig. Dies ist nicht erstaunlich, gilt es das chemisch doch eher schwierige Problem der Mischung einer sauren Chelatbildnerlösung mit einer üblicherweise alkalischen Bindemittelemulsion zu lösen, wobei das Produkt, soll es wirklich gewerblich oder industriell anwendbar sein, genügend lagerbeständig und einfach und effektvoll hinsichtlich seiner Anwendung sein muss Optimal würde das Mittel, wenn es als eigentliches Grundierungsmittel Verwendung finden könnte.

Eben die genannten technischen Verbesserungen werden nun durch die neuen Zusammensetzungen gemäss dieser Erfindung erreicht, wobei selbst für die Fachleute der Anmelderin nicht vorauszusehen war, dass dieses Resultat durch den Zusatz der 3 charakteristischen Komponenten, Kieselpulver, Heteropolysaccharid und pflanzliches Öl, die einzeln in der Anstrichmittel-Industrie zwar gelegentlich eingesetzt werden, als Kombination in den angegebenen Verhältnissen jedoch unbekannt sind, erreicht wird.

Die US-A-4 298 691 lehrt zwar ein Verfahren zur Herstellung sehr spezieller Heteropolysaccharide und auch deren Verwendung in Färbmischungen. Der Einsatz in leicht sauren, Fe-Komplexierungsstoffe enthaltenden Rostinhibitoren wird aber weder gelehrt noch nahegelegt, im Gegenteil : Die Hauptwirkung dieses speziellen Heteropolysaccharides ist anscheinend die Stabilisierung der Pigmentdispersion in üblicherweise alkalischen Färbmitteln (Kol. 9, Z. 1 ff). In der erfindungsgemässen Zusammentsetzung kann zudem jedes erhältliche Heteropolysaccharid der in den Ansprüchen definierten Art eingesetzt werden.

Die Zusammensetzungen gemäss der EP-BI 0 107 899 sind rein wässerige Rostumwandler. Diesen wird Kieselpulver zugesetzt, um deren Viskosität heraufzusetzen. Die technische Lehre der genannten EP-BI legt somit weder die Verwendung von gemischt-phasigen Bindemitteln aus speziellen Kunststoff-Latexen und Polymerlösungen noch den Zusatz von Holzöl und schon gar nicht einen maximalen Wassergehalt und einen Zusatz von u.a. nichtionischen, oberflächenaktiven Mitteln nahe.

Das Verfahren zur Herstellung der Rostumwandler gemäss der EP-BI 0 107 899 ist sehr speziell.

Im Gegensatz zu den bekannten Lehren ist die erfindungsgemässe rostinhibierende Grundierungszusammensetzung in hochbeständiger Emulsionsform enthaltend Lösungen, Dispersionen und/oder Emulsionen von filmbildenden plastischen Harzen bzw. Bindemitteln, Chelatbildner und saure Aktivatoren dadurch gekennzeichnet, dass die Zusammensetzung,

– als Bindemittel sowohl einen höchstalkalibeständigen StyrolButadien-Latex wie auch eine Lösung eines Copolymers auf der Basis von Vinyltoluol-Acrylsäureester in White Spirit,

– 1-6 Gew.-% — bezogen auf das Gesamtgewicht— amorphes, hochdisperses Siliziumdioxid, zusammen mit 0,07 bis 1 Gew.-% — bezogen auf das Gesamtgewicht — an anionischem Heteropolysaccharid (bei der Fermentation von verschiedenen Kohlehydratvorlagen durch Bakterien der Gattung Xanthomonas erhaltendes Produkt, auch Xanthan-Gummi genannt), sowie

– von 6 bis 10 Gew.-% — bezogen auf das Gesamtgewicht— an Holzöl enthält,

wobei die Zusammensetzung einen Wassergehalt unter 45 Gew.-% — bezogen auf das Gesamtgewicht— aufweist.

Die genannte rostinhibierende Grundierungszusammensetzung enthält vorteilhafterweise noch kleinere Mengen an Emulgatoren, Penetrierungshilfsmitteln, nichtionischen, oberflächenaktiven Mitteln und mit Wasser mischbaren, organischen Lösungsmitteln.

Ueblicherweise enthält diese rostinhibierende Grundierungszusammensetzung Gehalte an Harzen bzw. Bindemitteln von etwa 10 bis 30 Gew.-%, an Chelatbildnern von etwa 0,5 bis 6 Gew.-%, beide bezogen auf das Gesamtgewicht, und an sauren Aktivatoren, so, dass ein pH-Wert der Zusammensetzung zwischen 1 und 6 resultiert, speziell gilt, dass die Chelatbildner Tannine und/oder Gallussäure sind, deren Wirkungen durch Salicylsäure, Benzoesäure, Resorcylsäure, Resorcin, Hydrochinon und/oder Pyrogallol verstärkt werden, und dass die sauren Aktivatoren flüchtige organische Säuren sind.

Zur Herstellung der rostinhibierenden Grundierungszusammensetzung werden, entsprechend der Natur der Komponenten, eine ölig-organische und, getrennt davon, eine wässerige Phase gebildet, wonach, während des Emulgierens der beiden Phasen, das amorphe, hochdisperse Siliziumdioxid beigegeben wird.

Verwendet wird die neue rostinhibierende Grundierungszusammensetzung zur Grundierung von trockenen Eisen- und Stahloberflächen mittels verschiedener Auftragungsverfahren, wobei eine Grundierungsschicht erhalten wird, auf der übliche Deck-Emulsionsfarbstoffe aufgetragen werden können.

Unter "Kieselpulver" wird hier jedes amorphe, hochdisperse Siliziumdioxid verstanden, das erfindungsgemäss einsetzbar ist. Derartige Siliziumdioxid-Produkte werden heute allgemein mittels Flammverfahren hergestellt.

Mit "anionisches Heteropolysaccharid" wird hier das bei der Fermentation von verschiedenen Kohlehydrat-Vorlagen durch Bakterien der Gattung Xanthomonas (X. campestris) erhaltene Produkt bezeichnet. Bis vor wenigen Jahren wurden Produkte der obigen Art als Xanthan-Gummi gehandelt.

Unter "pflanzliche, lufttrocknende oele, bzw. mit derartigen Ölen modifizierte Phthalatharze" werden in dieser Beschreibung vor allem Holzöl, Leinöl, Safloröl, Oitizikaöl, Mohnöl und ähnliche pflanzliche, fette Öle verstanden ; Phthalatharze können bekanntlich relativ leicht mit derartigen Ölen modifiziert werden.

Die Erfindung wird nun anhand von Beispielen exemplifiziert ; die dabei verwendete Angabe G% bezeichnet Gewichtsprozente, bezogen auf das Gesamtgewicht der Zusammensetzung.

## Beispiel 1

Aus 30 G% eines thermoplastischen Copolymers auf der Basis von Vinyltoluol/Acrylsäureester (45-G%-ig in White Spirit gelöst), aus 7,5 G% Holzöl (Standöl) und aus insgesamt 2,5 G% nichtionischem Tensid und Weichmacher (Paraffinderivat) wird unter leichter Erwärmung und langsamem Rühren eine ölig-organische Phase zubereitet, in die 12,5 G% eines etwa 50-%-igen, wässerigen höchst alkylibeständigen Latexes auf Basis von Styrol-Butadien einemulgiert werden.

Daneben wird aus 33,5 G% Wasser, aus 0,05 G% Heteropolysaccharid (Rhodopol 23 der Rhône-Poulenc S.A.), aus 7 G% Isopropanol, aus insgesamt 2 G% eines Gemisches aus natürlichem Tannin und Gallussäure und aus 0,55 G% Butylglykol eine wässerige Phase zubereitet.

Beim Zusammengeben der beiden Phasen werden, unter starkem Rühren mit Scherwirkung, langsam 4,4 G% Kieselpulver (FK 320 DS der DEGUSSA) zugegeben. Erhalten wird eine weisse stabile Emulsion, die leicht mittels Pinsel, Rolle oder aber auch mit der Spritzpistole aufgetragen werden kann.

## Beispiel 2

Eine rostinhibierende Grundierungszusammensetzung mit Zusatz von 8 G% Quarzmehl (gemahlener Quarzstein oder -sand mit Korngrössen um 0,1 mm) wird erhalten, wenn das Vorgehen gemäss Beispiel 1 befolgt wird, wobei von den Komponenten des ersten Beispiels bei der Harzlösung etwa 2 G%, bei der Harzemulsion ebenfalls etwa 2 G%, beim Wasser etwa 3 G% und beim Kieselpulver etwa 1 G% weniger eingesetzt werden. Erhalten wird in diesem Beispiel eine viskose, weiss-gräuliche Emulsion, die gut mittels Pinsel und Rolle aufgetragen werden kann.

In die oben erhaltenen zwei Produkte können übrigens Metallteile auch eingetaucht und so grundiert werden.

Die physiologische und ökologische Unbedenklichkeit der erfindungsgemässen Mittel ist, bedingt vor allem durch die Abwesenheit von Schwermetallen wie Blei, von Mineralsäure wie Salzsäure, und von Phosphaten gegeben. Zugleich wird durch die erfingungsgemässe Zusammensetzung ein neuer Stand derartiger Grundierungen hinsichtlich Lagerstabilität und Anwendungscharakteristiken erreicht.

Die erfindungsgemässen Zusammensetzungen werden im folgenden mit bekannten Mitteln — bzw. solchen aus der Schweizer Patentschrift 580 152 — verglichen.

**Tabelle 1**

Formulierungen der zu vergleichenden Rostschutzsysteme (Gewichtsprozente).

Formulierung 1
basierend auf Kelate$^R$ (1337-V)

| | |
|---|---|
| Kelate$^R$ 51 | 35 % |
| Isopropanol | 43 % |
| Styrol-Butadiene | 5 % |
| Wasser | 17 % |

Formulierung 2

basierend auf schweiz. Patent 580 152

| | |
|---|---|
| Styrol-Butadien-Kautschukdispersion | 40 % |
| Butanol | 1 % |
| Öldispersion | 8 % |
| Tannin | 2 % |
| Isopropanol | 6,5 % |
| Ameisensäure 85 % | 0,75 % |
| Wasser | 40,75 % |
| Butylglycol | 1 % |

Formulierung 3
basierend auf schweiz. Patent 580 152

| | |
|---|---|
| Acrylcopolymer | 55 % |
| Polyesterharz | 3 % |
| Tannin | 2 % |
| Ameisensäure 85 % | 0,5 % |
| Äthylenglycol | 6 % |
| Wasser | 43,9 % |

Formulierung 4
erfindungsgemässe Zusammensetzung
> r

| | |
|---|---|
| Thermoplastisches Vinyltoluol/Acrylsäureesterharz in White Spirit | 26 % |
| Trocknendes Öl | 6 % |
| Polyvinylstyrolbutadien | 10 % |
| Heteropolysaccharid | 0,07 % |
| Weichmacher | 1,5 % |
| Kieselpulver | 1 % |
| Isopropanol | 6,5 % |
| Butylglycol | 2,5 % |
| Ameisensäure 85 % | 0,5 % |
| Tannin | 2 % |
| Netzmittel | 1 % |
| Quarz (SiO$_2$) | 12 % |
| Wasser | 32,9 % |

Formulierung 5
Konventionelle lösungsmittelhaltige Rostschutzformulierung,

**Tabelle II**

Qualitätsvergleich der auf dem schweiz. Patent 580 152 und auf andern Veröffentlichungen (wie Kelate) basierenden gerbstoffhaltigen Emulsionen mit der erfindungsgemässen Technologie.

| Qualitätskriterien | Formulierung I |
|---|---|
| - Aussehen | dunkelbraun, trüb |
| - pH-Wert | 0,6 |
| - Umsetzungsverhalten (Eindringungsvermögen/ Filmbildung) | schlechte Filmbildung, Film trocknet langsam, versprödet nach längerer Trocknungszeit (2 Monaten) |
| - Applikationsverhalten | starke Tendenz zum Ablaufen, Kantenflucht |
| - Filmtechnisches Verhalten Substrat: Oberflächenvorbereitung des natürlich gerosteten Stahl es St 37 (1) nach DIN 55 928 | C St 2 |
| Applikationsvorgehen (mittels Pinsel) | 2-maliger Auftrag 30 - 50 $\mu$m |
| Haftung nach DIN 53 151 (Gitterschnitt) mit zusätzlichem Abriss (Vergleiche ASTM-D3359) nach 3-monatiger Trockenzeit | Versprödung GT 4 |
| Salzsprühtest nach DIN 50 021 (2) (Blasen nach DIN 53 209, Rostgrad, Haftung (5) ) | nach 100 h Film zerstört |
| VDA-Test (3) nach 621-415, mit $SO_2$ verstärkt | nach 4 Zyklen Film zerstört |
| Freibewitterung (4) ohne Deckanstrich | nach 1/2 Jahr Film völlig zerstört |
| Freibewitterung (4) mit Acryldecklack | nach 1/2 Jahr Blasen $m^3/g^3$ Rostgrad R 3 Haftung GT 5 |
| - Physiologische Aspekte | stark sauer (pH 0,9) Giftklasse 4 |

| Formulierung 2 | Formulierung 3 |
|---|---|
| weisse Emulsion | weisse Emulsion |
| 3,0 | 3,0 |
| | nach erstem Anstrich mässige Umsetzung |
| Kantenflucht, Schäumen Ablauftendenz, empfindlich bei leicht mit Fett verschmutzten Oberflächen | Kantenflucht, Ablauftendenz, schwaches Schäumen, sehr empfindlich auf Öl/Fett |
| C St 2 | C St 2 |
| 2-maliger Auftrag 60 - 80 $\mu$m | 2-maliger Auftrag 60 - 80 $\mu$m |
| GT 2 | GT 2 |
| nach 100 h Blasen $m^3/g^3$ | nach 200 h Blasen $m^3/g^4$ |
| Rostgrad R 3 | Rostgrad R 3 |
| Haftung (5) GT 3 | Haftung (5) GT 5 |

nach 4 Zyklen Blasen $m^4/g^3$
Rostgrad R 4
Haftung GT 3

nach 1 1/2 Jahr Rostgrad R 2
von der Seite her Unterwanderung
Haftung GT 2

Nach 1 1/2 Jahr Rostgrad R 2
Haftung
GT 3

unbedenklich
nicht feuergefährlich

Formulierung 4

weisse Emulsion

3,0
gut
gegen Öl/Fett deutlich
weniger empfindlich im
Vergleich zu Beispiel 1 und 2,
gutes Kantenstehvermögen, gutes Spritzverhalten, gutes Stehvermögen
an senkrechten Flächen,
kein Schaum.

C St 2
2-maliger Auftrag ca. 90 μm
GT 0
nach 200 h teilweise
Blasen $m^3/g^3$; nach
Exposition Rückbildung
Rostgrad R 0,
Haftung GT 0

nach 8 Zyklen teilweise
Blasen $m^2/g^3$,
Rückbildung,
Rostgrad R 0, Haftung
GT 1 - 2

Nach 2 1/2 Jahren
Blasen $m^2/g^2$
Rostgrad R 0
Haftung GT 1

Film kreidet, sonst
ohne Beeinträchtigung, d. h.
Blasen 0
Rostgrad R 0
Haftung DT 1

unbedenklich (nicht in
in schweiz. Giftklasse zu
deklarieren) nicht
feuergefährlich.

nach 4 Zyklen Blasen $m^3/g^{3-4}$
Rostgrad R 3 - 4
Haftung GT 5

nach 1 Jahr Blasen $m^3/g^3$
Rostgrad R 2 - 3
Haftung GT 5
Unterwanderung von der Seite

Blasen $m^3/g^3$
Rostgrad R 2 - 3
Haftung GT 5

unbedenklich
nicht feuergefährlich

Formulierung 5

rot pigmentierte 1-Komp. Öl/
Alkydfarbe

C St 2
80 μm
GT 0
--

nach 8 Zyklen Blasen 0
Rostgrad R 2 - 3
Haftung GT 3

nach 2 1/2 Jahren Unterwanderung
von der Seite, sonst Film
intakt

--

stark lösungsmittelhaltig,
feuergefährlich (dürfte
Giftklasse 4 aufweisen)

(1) Natürlich gerostete Stahlbleche :
— Baustahl St 37, nach 1/2 Jahr am Wetter natürlich bewittert in Widnau

— Vorbereitung der Stahloberfläche St 2 nach DIN 55 928. Rost ist soweit entfernt, dass die Stahloberfläche nach der Nachreinigung einen schwachen, vom Metall herrührenden Glanz aufweist.

(2) Sprühnebelprüfung :

Temperatur in Prüfkammer 35 ± 2°

Sprühmenge auf 80 cm² Fläche : 1,5 ± 0,5 ml pro Stunde.

Prüflösung : 5% NaCl-Lösung.

(3) VDA 621-415 Prüfung :

Prüfung des Korrosionsschutzes von Kraftfahrzeuglackierungen bei zyklisch wechselnder Beanspruchung (mit $SO_2$ verstärkt) ; d.h. :

1 Prüfzyklus : 24 h, Salzsprühtest nach DIN 50 021

4 Tage : 4 Zyklen Kesternichtest nach DIN 50 018/2,0 1 S

2 Tage : 48 h Raumtemperatur nach DIN 50 014.

(4) Freibewitterung, d.h. Prüfbleche ohne zusätzlich geschützte Ränder, zwecks Verfolgung der Unterwanderung : Die Bleche wurden mit einem Winkel von 450 und nach Süden am Wetter exponiert (nach internat. Norm).

(5) Haftung nach Exposition : nach 1 Woche Erholung bei Raumtemperatur nach DIN 50 014 wurde der Gitterschnitt nach DIN 52 151 durchgeführt.

Die Vergleichsuntersuchungen zwischen den bekannten Produkten und einer erfindungsgemässen gerbstoffhaltigen Rostschutzdispersion zeigen, neben den applikationstechnischen Verbesserungen, insbesondere auch eine deutliche Erhöhung des Rostschutzvermögens, d.h. :

— Verbesserung bezüglich Applikation :

– bessere Spritzbarkeit
– weniger Ablauftendenz
– sehr gutes Kantenstehvermögen (keine Kantenflucht)
– keine Schaumbildung

— Verbesserung bezüglich Rostschutzvermögen :

– Haftung nach Beanspruchung durch Feuchtigkeit und natürlicher Alterung
– Langzeitrostschutz : aktiver Rostschutz bei atmosphärischer Beeinflussung, spezifisch bezüglich Unterwanderung
– sehr guter Kantenschutz
– Rostschutzverhalten bei Prüfungen des Korrosionsschutzes bei zyklisch wechselnder Beanspruchung (mit $SO_2$ verstärkt)

## Patentansprüche

1. Rostinhibierende Grundierungszusammensetzung in hochbeständiger Emulsionsform enthaltend Lösungen, Dispersionen und/oder Emulsionen von filmbildenden plastischen Harzen bzw. Bindemitteln, Chelatbildner und saure Aktivatoren, dadurch gekennzeichnet, dass die Zusammensetzung,
   – als Bindemittel sowohl einen höchstalkalibeständigen Styrol-Butadien-Latex wie auch eine Lösung eines Copolymers auf der Basis von Vinyltoluol-Acrylsäureester in White Spirit,
   – 1-6 Gew.-% — bezogen auf das Gesamtgewicht — amorphes, hochdisperses Siliziumdioxid, zusammen mit 0,07 bis 1 Gew.-% — bezogen auf das Gesamtgewicht — an anionischem Heteropolysaccharid (bei der Fermentation von verschiedenen Kohlehydratvorlagen durch Bakterien der Gattung Xanthomonas erhaltendes Produkt, auch Xanthan-Gummi genannt), sowie
   – von 6 bis 10 Gew.-% — bezogen auf das Gesamtgewicht — an Holzöl enthält,
   wobei die Zusammensetzung einen Wassergehalt unter 45 Gew.-% — bezogen auf das Gesamtgewicht — aufweist.

2. Rostinhibierende Grundierungszusammensetzung gemäss Patentanspruch 1, dadurch gekennzeichnet, dass sie zusätzlich noch kleinere Mengen an Emulgatoren, Penetrierungshilfsmitteln, nichtionischen, oberflächenaktiven Mitteln und mit Wasser mischbaren, organischen Lösungsmitteln enthält.

3. Rostinhibierende Grundierungszusammensetzung gemäss Patentanspruch 1, mit Gehalten an Harzen bzw. Bindemitteln von etwa 10 bis 30 Gew.-%, an Chelatbildnern von etwa 0,5 bis 6 Gew.-%, beide bezogen auf das Gesamtgewicht, und an sauren Aktivatoren so, dass ein pH-Wert der Zusammensetzung zwischen 1 und 6 resultiert, dadurch gekennzeichnet, dass die Chelatbildner Tannine und/oder Gallussäure sind, deren Wirkungen durch Salicylsäure, Benzoesäure, Resorcylsäure, Resorcin, Hydrochinon und/oder Pyrogallol verstärkt werden, und dass die sauren Aktivatoren flüchtige organische Säuren sind.

4. Verfahren zur Herstellung der rostinhibierenden Grundierungszusammensetzung gemäss den Patentansprüchen 1, 2 oder 3, dadurch gekennzeichnet, dass, entsprechend der Natur der Komponenten, eine öligorganische und, getrennt davon, eine wässerige Phase gebildet werden und dass während des Emulgierens der beiden Phasen das amorphe, hochdisperse Siliziumdioxid beigegeben wird.

## Claims

1. Rust-inhibiting primer composition in the form of a highly stable emulsion, consisting of solutions, dispersions and/or emulsions of film-forming plastic resins or binders, chelate formers, acid activators and other conventional agents, characterized in that it additionally contains
   - as binders, both styrene/butadiene latex of very high alkali resistance and a solution of a copolymer based on vinyltoluene/ acrylate in white spirit,
   - 1 to 6% by weight — relative to the total weight — of silica powder (amorphous, highly disperse silica) with 0,07 to 1% by weight — relative to the total wight — of an anionic hetero-polysaccharide (product obtained in the fermentation of various carbohydrate feeds by bacteria of the genus Xanthomonas, also called xanthan gum) and
   - 6 to 10% by weight — relative to the total weight — of wood oil ;
   the composition having a water content of less than 45% by weight — relative to the total weight.

2. Rust-inhibiting primer composition according to Patent Claim 1, characterized in that it additionally also contains minor quantities of emulsifiers, penetration aids, non-conic surface-active agents and water-miscible organic solvents.

3. Rust-inhibiting primer composition according to Patent Claim 1, with contents of resins or binders about 10 to 30% by weight and of chelate formers about 0,5 to 6% by weight — both relative to the total weight — and with a content of acid activators such that the resulting pH value of the composition is between 1 and 6, characterized in that the chelate formers are tannins and/or gallic acid, the effects of which are boosted by salicylic acid, benzoic acid, resorcylic acid, resorcinol, hydroquinone and/or pyrogallol, and that the acid activators are volatile organic acids.

4. Process for producing the rust-inhibiting primer composition according to Patent Claim 1, 2 or 3, characterized in that, in accordance with the nature of the components, an oily organic phase and, separately thereof, an aqueous phase are formed, and that the silica gel is added during the emulsification of the two phases.

## Revendications

1. Composition de couche de base anti-rouille sous forme d'émulsion de grande stabilité à partir de solutions, dispersions et/ou émulsions de résines plastiques formant pellicules ou de liants, formateurs de chélates, activeurs acides et autres agents habituels, caractérisée en ce qu'elle contient en outre
   - comme liant aussi bien un latex styrène-butadiène très résistant aux bases qu'une solution d'un copolymère à base de vinyltoluène-ester d'acide acrylique dans le white spirit,
   - de 1 à 6% en poids — par rapport au poids total — de poudre de silice (dioxyde de silicium hautement dispersé amorphe) avec de 0,07 à 1% en poids — par rapport au poids total — d'hétéropolysaccharide anionique (produit obtenu lors de la fermentation de plusieurs types d'hydrates de carbone des bactéries du genre Xanthomonas, également appelé gomme de xanthane) et
   - de 6 à 10% en poids — par rapport au poids total — d'huile de bois de Chine,
   où la composition présente une teneur en eau inférieure de 45% en poids — par rapport au poids total.

2. Composition de couche de base anti-rouille selon la revendication 1, caractérisée en ce qu'elle contient encore en outre de faibles quantités d'émulsifiants, d'adjuvants de pénétration, d'agents tensio-actifs non-ioniques et de solvants organiques miscibles à l'eau.

3. Composition de couche de base anti-rouille selon la revendication 1, avec des teneurs en résines ou en liants à environ 10 à 30% en poids et en formateurs de chélates à environ 0,5 à 6% en poids et avec une teneur en activeurs acides telle qu'il en résulte un pH de la composition compris entre 1 et 6, caractérisée en ce que les formateurs de chélates sont des tannins et/ou l'acide gallique, dont les effets sont renforcés par l'acide salicylique, l'acide benzoique, l'acide résorcylique, la résorcine, l'hydroquinone et/ou le pyrogallol et en ce que les activeurs acides sont des acides organiques volatils.

4. Procédé de préparation de la composition de couche de base antirouille selon les revendications 1, 2 ou 3, caractérisé en ce que, selon la nature des composants, une phase organique huileuse et, séparément, une phase aqueuse se forment et en ce que pendant l'émulsification des deux phases le gel d'acide silicique est ajouté.